# EUROPEAN PATENT SPECIFICATION

(11) **EP 0 520 049 B1**
(45) Date of publication and mention of the grant of the patent: **28.02.1996**
(21) Application number: 92900861.3
(22) Date of filing: 19.12.1991
(51) Int. Cl.: H04Q 7/38

(54) **A METHOD FOR SETTING UP AN INCOMING CALL TO A MOBILE RADIO IN A CELLULAR MOBILE RADIO NETWORK**
VERFAHREN ZUR VERMITTLUNG EINES EINGEHENDEN GESPRÄCHES AN EINE MOBIL-FUNKSTATION IN EINEM ZELLULAR-MOBILFUNKNETZ
PROCEDE D'ETABLISSEMENT D'UNE COMMUNICATION D'ARRIVEE VERS UN TELEPHONE RADIO MOBILE DANS UN RESEAU DE RADIOCOMMUNICATIONS CELLULAIRE

(30) Priority: 15.01.1991 FI 910211
(43) Date of publication of application: 30.12.1992
(73) Proprietor: NOKIA TELECOMMUNICATIONS OY, FIN-02600 Espoo (FI)
(72) Inventor: HUOTARI, Seppo, SF-02600 Espoo (FI)
(74) Representative: Tomlinson, Kerry John
(86) International application number: FI9100403
(87) International publication number: WO9213428

(56) References cited:
- EP-A- 0 167 458
- EP-A- 0 193 316
- EP-A- 0 291 068

## Description

The invention relates to a method for setting up an incoming call to a mobile radio in a cellular mobile radio network comprising a home location register for permanently storing location and subscriber data concerning mobile radios registered with the network, the geographical coverage area of the network being divided into smaller service areas each comprising a visitor location register for temporarily storing subscriber data concerning mobile radios currently located within said service areas, and a switching centre associated with the visitor location register, the geographical coverage area of each service area being further divided into location areas each further divided into radio cells each comprising at least one fixed radio station capable of establishing a radio link with the active mobile radios currently located in the radio cell.

In various cellular radio or mobile radio systems presently in use or being developed the geographical coverage area of the system is divided into smaller separate radio areas or cells in such a way that when the mobile radio is in a cell, it communicates with a fixed network through a fixed radio station located in the cell. Mobile radios belonging to the system are free to roam from one cell to another within the area of the system. An example of such systems is the digital mobile radio system GSM (Groupe Spécial Mobile). When a subscriber in the same system or in an external system wants to call a mobile radio or a mobile subscriber MS in this kind of cellular system, the fixed network has to know the actual location of the mobile radio MS in order to be able to route the call to the right mobile services switching centre MSC. In the GSM system, for example, the number selected by a calling subscriber contains no information on the actual location of the called MS. Therefore, to set up the connection, it is necessary to determine the location of the MS by utilizing a routing address, i.e. the mobile radio roaming number. In the GSM system, this information can be provided solely by the home location register HLR, which is a database in which subscriber data, such as location data, are stored permanently. Therefore, in order to be able to route the call to the MSC within the area of which the MS is currently located, it is necessary to send a request to the HLR.

In the GSM system, each location area consisting of several radio cells comprises a visitor location register VLR, which is a database in which subscriber data are stored while the subscriber visits the area of the VLR. The VLR gives the HLR the information required for routing calls to the MS and participates e.g. in the switching of calls in the MSC.

There are two alternative ways of giving the routing information, i.e. a roaming number. First, the roaming number can be given when the VLR updates the location of the subscriber, and the roaming number is stored in the HLR. In this case, the HLR returns the stored roaming number without further procedures when it receives a routing information request.

Secondly, the HLR may request the VLR within the area of which the MS is currently located to provide a roaming number assigned exclusively to this call when requested by a gateway MSC or one of the MSCs. The HLR forwards the roaming number provided by the VLR to the requesting MSC, and so the MSC routes the call to the right MSC on the basis of the roaming number. After the call has been routed up to the MSC, the MSC initiates a mobile radio paging procedure within its location area to find the cell and the fixed radio station within the area of which the MS is located. After finding the MS, the MSC establishes a radio link with the MS through this fixed radio station and sets up the call.

The object of the invention is to speed up the call setup procedure in this type of cellular mobile radio system.

This is achieved by a method according to the invention, wherein, when the visitor location register receives the routing information request from the home location register, the switching centre associated with the visitor location register initiates immediately the paging of the mobile radio within the location area.

As already mentioned above, the HLR requests the current VLR to provide a roaming number in systems where the roaming number is assigned separately for each call. In the invention this is utilized in such a manner that the MSC associated with the VLR initiates the paging of the mobile radio within its area, and performs authentication, ciphering, and other required procedures immediately after the reception of the request instead of performing them only after the call has actually been routed to the MSC in question. This speeds up the setup procedure for the incoming call, that is, shortens the waiting time for the calling subscriber. The invention is particularly advantageous in cases where the MSC and the VLR are integrated, whereby the interface between them can be easily realized otherwise than as specified in the GSM recommendations without causing any compatibility problems or other difficulties on the system level.

In one embodiment of the invention, the VLR sends a roaming number to the HLR immediately after receiving a request if the data contained in the VLR indicates that the mobile radio in question is active. In another embodiment of the invention, the VLR transmits a roaming number to the HLR only after successful completion of the mobile radio paging procedure. If the paging procedure fails, the VLR informs the HLR about the failure, and the call is released. This procedure avoids unnecessary assignment of speech channels in the network.

The invention will now be described in greater detail by means of illustrating embodiments with reference to the attached drawings, in which
Figure 1 illustrates schematically a cellular mobile radio system in which the method according to the invention can be applied;
Figure 2 is a signalling diagram illustrating a prior art call setup procedure;
Figure 3 is a signalling diagram illustrating a setup procedure for an incoming call in accordance with the invention; and
Figure 4 is a signalling diagram illustrating another setup procedure for an incoming call in accordance with the invention.

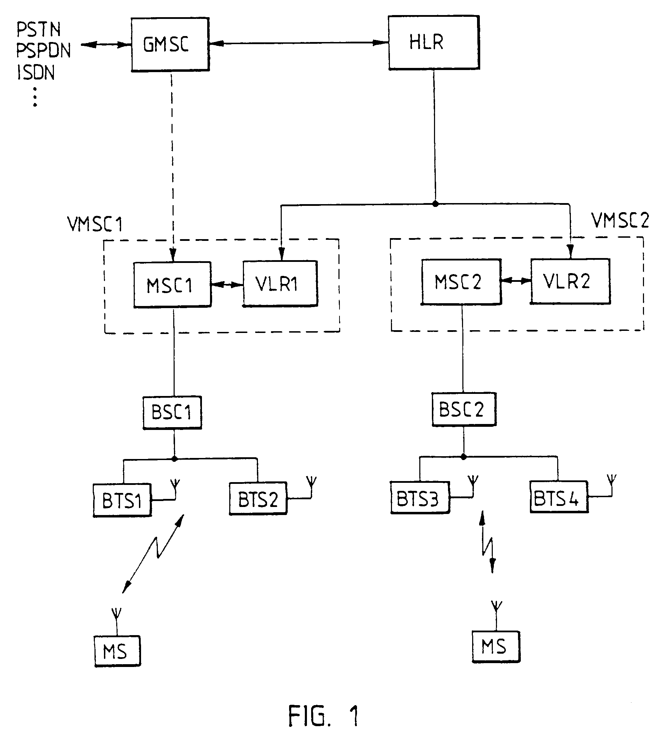

In the following the method according to the invention will be explained in conjunction with the digital GSM mobile radio system, which, in fact, is the primary field of application of the invention. However, the method according to the invention can also be applied in other similar mobile radio systems or in the modifications of the GSM system. The basic structure and basic operations of the GSM mobile radio system are obvious to those skilled in the art and relatively accurately defined in the GSM specifications. In the text below, some of the basic concepts and elements of the GSM system will be defined referring to Figure 1 in so far as they are significant for the understanding of the invention. An area within which the GSM mobile radio services are available is called a GSM network (GSM service area) which may cover several countries. The GSM network may be divided into national GSM networks (PLMN service area), which means the area of one operator providing GSM services. There may also be several GSM networks in one country and their coverage areas may overlap geographically. In the following the mobile radio system refers mainly to a "national" mobile radio network which may communicate with other national mobile radio networks or other telecommunication networks, such as a public telephone network PLMN.

The national GSM network may comprise one or more MSC service areas, that is, one or more areas in which a single MSC provides services. The MSC service area may further be divided into one or more location areas covered by one or several radio cells. The term cell refers to the smallest geographical area of the system comprising one or more fixed radio stations or base stations and utilizing predetermined traffic channels.

The national GSM network usually contains one home location register HLR, which is a database in which mobile radio data, such as location data, are stored permanently. The system further comprises one or more visitor location registers VLR for each MSC service area. The VLR is a database in which mobile radio data are stored while the mobile radio visits the area of the VLR. The VLR stores information on the location of the mobile radio MS with the accuracy of one location area. The HLR in turn stores information on the VLR which the mobile radio MS visits and provides routing information to the mobile radio network for calls terminating in the mobile radio MS. The HLR in turn obtains the required routing information from the VLR. The HLR and the VLR have solely a signalling connection with the other components of the mobile radio network.

The method according to the invention is primarily intended to be applied in a system shown in Figure 1, in which each MSC service area has its own visitor location register VLR integrated with the MSC of the particular MSC service area. Figure 1 shows two service areas in one of which a mobile services switching centre MSC1 and a visitor location register VLR1 form an integrated unit VMSC1 and in the other of which a mobile services switching centre MSC2 and a visitor location register VLR2 form an integrated unit VMSC2. Under the two service areas covered by the integrated units VMS1 and VMS2, there are one or more location areas, traffic within each location area being controlled by a base station controller BSC controlling several fixed radio stations or base transceiver stations BTS. Each radio cell mentioned above contains one base station BTS, and one base station controller BTS serves several cells. A mobile radio MS located in a cell establishes a two-way radio link with the BTS of this particular cell. There is both a signalling connection and speech channels between the base station controller BSC and the MSC.

In Figure 1, the VMSC1 controls a base station controller BSC1, which in turn controls base stations BTS1 and BTS2. Within the other service area, the VMSC2 controls a location area comprising a base station controller BSC2 and base stations BTS3 and BTS4.

In general, the GSM network communicates with other networks, such as a public telephone network (PSTN), another mobile radio network (PSPDN) or an ISDN network, through a certain mobile services switching centre called a gateway MSC (GMSC). One or some (all) of the MSCs of the network may serve as a gateway MSC. It is possible to establish a speech channel connection from the gateway MSC to any other MSC of the network. The gateway MSC further has a signalling connection with the home location register HLR. The HLR in turn has a signalling connection with the visitor location registers VLR. Alternatively, the switching centre of another telecommunication system, such as an ISDN centre, may serve as the gateway MSC.

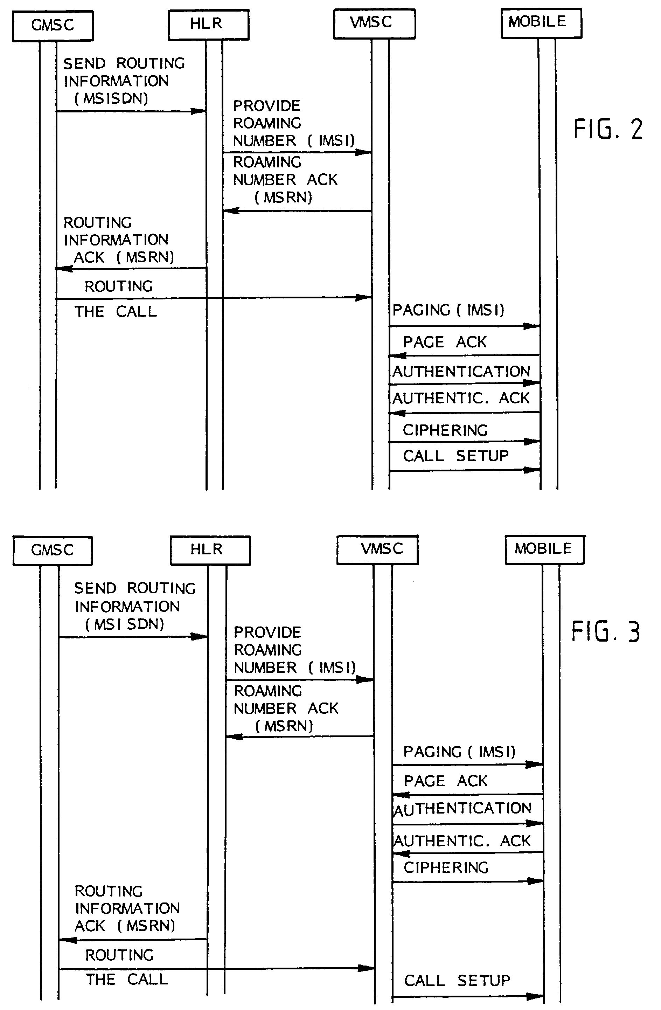

Figure 2 shows a signalling diagram in which the setup of an incoming call is performed in compliance with the GSM recommendation. The MSC, in this specific case the gateway MSC, receives an international telephone number of a mobile radio MS (international ISDN number) from another network, and forwards it to the home location register of the mobile radio network so as to request it to provide routing information. Alternatively, the HLR may receive the routing information request from the centre of another telecommunication system, such as an ISDN centre. The HLR checks from its data file the visitor location register VLR within the area of which the mobile radio MS having this particular ISDN number is currently located and requests this visitor location register to provide a roaming number by sending it an international mobile station identifier IMSI used within the mobile radio network. In Figure 2, the VMSC (integrated VLR and MSC) assigns a roaming number MSRN for the mobile radio MS for this call and sends it to the HLR. The HLR forwards the roaming number MSRN as routing information to the gateway MSC (or to another switching centre which has requested it), and the gateway MSC routes the incoming call on the basis of this routing information to the MSC of the particular VMSC. The MSC initiates the paging of the mobile radio within that location area of its MSC service area in which the mobile radio should be located by sending the IMSI identifier of the mobile radio. On receiving the paging signal, the mobile radio acknowledges the receipt. The authentication, ciphering, and other possible procedures associated with the B subscriber are then carried out in compliance with the GSM specification, and the call is set up between the A subscriber and the mobile radio MS.

Figure 3 shows a signalling diagram in which the call setup takes place in accordance with the preferred embodiment of the method according to the invention. In Figure 3, similarly as in Figure 2, on receiving the telephone number of the mobile radio the gateway MSC requests the HLR to provide routing information by sending it the ISDN number of the mobile radio, as a result of which the HLR in turn requests the VMSC within the area of which the mobile radio MS is currently located to provide a roaming number by sending the IMSI identifier to it. The VLR in the VMSC assigns the mobile radio MS a roaming number MSRN for this call and sends it to the HLR, which forwards it to the GMSC. The GMSC starts to route the call to the MSC of the appropriate VMSC on the basis of this routing information.

As distinct from Figure 2, the VLR in the VMSC shown in Figure 3 responds to a roaming number request received from the HLR by causing the MSC in the same VMSC to immediately start the paging of the mobile radio within its area, and after finding the mobile radio, to start the above-mentioned authentication, ciphering and other required procedures. In this way a link required for the call is established between the VMSC and the mobile radio MS, while the gateway MSC routes the call to the VMSC, whereby a speech connection between the subscriber A and the mobile radio representing the subscriber B can be set up immediately after the establishment of the connection between the GMSC and VMSC. This shortens considerably the time the subscriber A has to wait for the call setup.

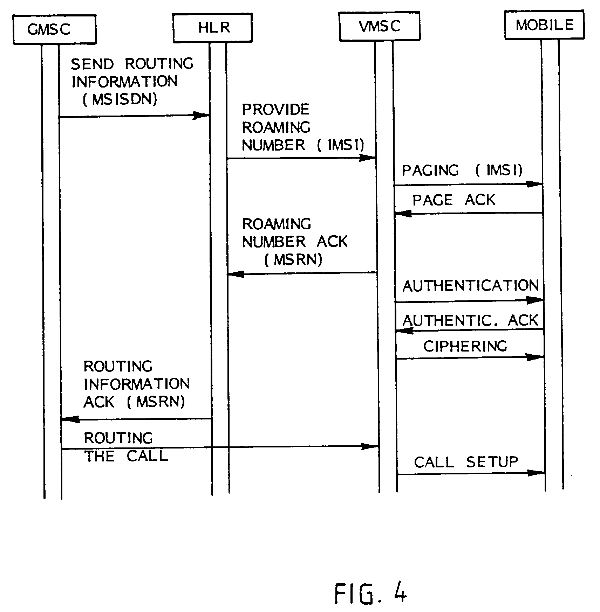

As explained above, the VLR in the VMSC shown in Figure 3 sends the roaming number to the HLR immediately after receiving the request in so far as the mobile radio in question is active according to the information contained in the VLR (the mobile radio has been switched on). Figure 4 shows a signalling diagram which illustrates an alternative embodiment of the method according to the invention. Similarly as in Figure 3, the VMSC in the method shown in Figure 4 responds to the roaming number request received from the HLR by immediately starting the paging of the mobile radio, the authentication, ciphering, etc. However, the signalling shown in Figure 4 deviates from Figure 3 in that the VMSC does not send the roaming number to the HLR until after the paging procedure has been successfully completed, that is, the mobile radio has sent an acknowledgement. The signalling and call setup then continues as shown in Figure 3. If the paging procedure fails and the mobile radio is not found, the VMSC informs the HLR about the failure and does not send a roaming number, which results in the release of the call. This is advantageous in that the call is not unnecessarily routed up to the VMSC, thus avoiding unnecessary assignment of the internal connections of the network. The VMSC may inform the HLR on the failed paging procedure by means of the signal which in the GSM specifications is assigned to forward information when the mobile radio MS is not active.

Since the invention influences only the realization of the VMSC, that is, the integrated VLR and MSC, all signalling taking place in the network can be performed fully in compliance with the GSM specifications and it needs not to be explained in more detail herein. As to the internal structure of the VMSC, the arrangements required for realizing the invention are obvious to those skilled in the art on the basis of the above description, and may vary depending on the technology used in each particular case.

Even though the method according to the invention has been described above in conjunction with the GSM mobile radio system, it is to be understood that it can also be applied in other mobile radio systems of the same type, or in the modifications of the GSM system. The figures and the description related to them are also otherwise solely intended to illustrate the present invention. In its details, the method according to the invention may vary within the scope of the attached claims.

## Claims

1. A method for setting up an incoming call to a mobile radio in a cellular mobile radio network comprising a home location register (HLR) for permanently storing location and subscriber data concerning mobile radios (MS) registered with the network, the geographical coverage area of the network being divided into smaller service areas each comprising a visitor location register (VLR1, VLR2) for temporarily storing subscriber data concerning mobile radios (MS) currently located within said service areas, and a switching centre (MSC1, MSC2) associated with the visitor location register, the geographical coverage area of each service area being further divided into location areas each further divided into radio cells each comprising at least one fixed radio station (BTS1-4) capable of establishing a radio link with the active mobile radios (MS) currently located in the radio cell, in which system
one of the switching centres (MSC1, MSC2, GMSC) or a switching centre of another telecommunications system communicating with the network receives the subscriber number of the mobile radio and requests the home location register (HLR) to provide call routing information, and the home location register (HLR) requests routing information from the visitor location register (VLR1, VLR2) within the location area of which the mobile radio (MS) is currently located, and forwards the received routing information to the switching centre which requested it for routing the call to the switching centre (MSC1, MSC2) of the current service area and further to the desired mobile radio (MS), which is searched by a paging procedure initiated by the switching centre within its location area, **characterized** in that when the visitor location register (VLR1, VLR2) receives the routing information request from the home location register (HLR), the switching centre (MSC1, MSC2) associated with the visitor location register initiates immediately the paging of the mobile radio (MS) within the location area.

2. A method according to claim 1, **characterized** in that the visitor location register (VLR1, VLR2) sends the routing information to the home location register (HLR) immediately after having received the request if the mobile radio is active according to the information stored in the visitor location register.

3. A method according to claim 1, **characterized** in that the visitor location register (VLR1, VLR2) sends the routing information to the home location register (HLR) when the mobile radio paging procedure initiated by the request from the home location register has been successfully completed.

4. A method according to any of the preceding claims, **characterized** in that the establishment of a radio link required for the call between the mobile radio (MS) and the fixed radio station (BTS1-4) of the cell where the mobile radio is located is initiated before the call is routed from the requesting switching centre (MSC1, MSC2, GMSC) to a switching centre (MSC1, MSC2) of the current location area.

5. A method according to any of the preceding claims, **characterized** in that on requesting routing information from the home location register, the switching centre sends the phone number of the mobile radio to the home location register.

6. A method according to any of the preceding claims, **characterized** in that on requesting routing information from the visitor location register, the home location register sends the visitor location register a mobile radio identification number used within the network.

7. A method according to any of the preceding claims, **characterized** in that the routing information provided by the visitor location register is a roaming number.

## Patentansprüche

1. Verfahren zur Vermittlung eines ankommenden Gespräches an eine Mobilfunkstelle in einem Zellular-Mobilfunknetz, das folgendes aufweist:
- eine Heimatdatei (HLR) zur permanenten Speicherung von Standort- und Teilnehmerdaten, welche die in dem Netz registrierten Mobilfunkstellen (MS) betreffen, wobei der geographische Versorgungsbereich des Netzes in kleinere Dienstleistungsbereiche unterteilt ist, von denen jeder eine Besucherdatei (VLR1, VLR2) zur temporären Speicherung der Teilnehmerdaten aufweist, welche die momentan innerhalb der Dienstleistungsbereiche befindlichen Mobilfunkstellen (MS) betreffen, und
- eine Vermittlungsstelle (MSC1, MSC2), die der Besucherdatei zugeordnet ist, wobei der geographische Versorgungsbereich von jedem Dienstleistungsbereich weiterhin in Standortbereiche unterteilt ist, die jeweils weiterhin in Funkzellen unterteilt sind, von denen jede mindestens eine feste Funkstation (BTS1-4) aufweist, welche in der Lage ist, eine Funkverbindung mit den aktiven Mobilfunkstellen (MS) aufzubauen, die sich momentan in der Funkzelle befinden,
wobei in diesem System die eine der Vermittlungsstellen (MSC1, MSC2, GMSC) oder eine Vermittlungsstelle eines anderen Telekommunikationssystems, das mit dem Netz kommuniziert, die Teilnehmernummer der Mobilfunkstelle empfängt und die Heimatdatei (HLR) auffordert, eine Gesprächs-Leitweginformation zu liefern, und die Heimatdatei (HLR) die Leitweginformation von der Besucherdatei (VLR1, VLR2) innerhalb des Standortbereiches anfordert, in dem sich die Mobilfunkstelle (MS) momentan befindet, und die empfangene Leitweginformation an diejenige Vermittlungsstelle übersendet, die sie angefordert hat, um das Gespräch der Vermittlungsstelle (MSC1, MSC2) des momentanen Dienstleistungsbereiches und ferner der gewünschten Mobilfunkstelle (MS) zuzuleiten, welche mit einem Funkrufverfahren gesucht wird, das von der Vermittlungsstelle innerhalb ihres Standortbereiches eingeleitet wird,
dadurch gekennzeichnet,
daß dann, wenn die Besucherdatei (VLR1, VLR2) die Anforderung der Leitweginformation von der Heimatdatei (HLR) empfängt, die Vermittlungsstelle (MSC1, MSC2), die der Besucherdatei zugeordnet ist, unmittelbar den Funkruf für die Mobilfunkstelle (MS) in dem Standortbereich einleitet.

2. Verfahren nach Anspruch 1,
dadurch gekennzeichnet,
daß die Besucherdatei (VLR1, VLR2) die Leitweginformation der Heimatdatei (HLR) unmittelbar nach dem Empfang der Anforderung zusendet, wenn die Mobilfunkstelle gemäß der in der Besucherdatei gespeicherten Information aktiv ist.

3. Verfahren nach Anspruch 1,
dadurch gekennzeichnet,
daß die Besucherdatei (VLR1, VLR2) die Leitweginformation der Heimatdatei (HLR) zusendet, wenn das durch die Anforderung von der Heimatdatei eingeleitete Funkrufverfahren für die Mobilfunkstelle erfolgreich abgeschlossen ist.

4. Verfahren nach einem der vorhergehenden Ansprüche,
dadurch gekennzeichnet,
daß der Aufbau einer Funkverbindung, die für das Gespräch zwischen der Mobilfunkstelle (MS) und der festen Funkstation (BTS1-4) der Zelle, in der sich die Mobilfunkstelle befindet, erforderlich ist, eingeleitet wird, bevor das Gespräch von der anfordernden Vermittlungsstelle (MSC1, MSC2, GMSC) zu einer Vermittlungsstelle (MSC1, MSC2) des momentanen Standortbereiches geleitet wird.

5. Verfahren nach einem der vorhergehenden Ansprüche,
dadurch gekennzeichnet,
daß bei Anforderung von Leitweginformation von der Heimatdatei die Vermittlungsstelle die Telefonnummer von der Mobilfunkstelle der Heimatdatei zusendet.

6. Verfahren nach einem der vorhergehenden Ansprüche,
dadurch gekennzeichnet,
daß bei der Anforderung von Leitweginformation von der Besucherdatei die Heimatdatei der Besucherdatei eine Identifizierungsnummer der Mobilfunkstelle zusendet, die in dem Netz verwendet wird.

7. Verfahren nach einem der vorhergehenden Ansprüche,
dadurch gekennzeichnet,
daß die von der Besucherdatei bereitgestellte Leitweginformation eine Gesprächsübergabenummer ist.

## Revendications

1. Procédé pour établir une communication arrivée pour un radiotéléphone mobile dans un réseau de radiocommunications mobile cellulaire, comportant un registre (HLR) de localisation de domicile pour stocker de manière permanente des données de localisation et d'abonnés concernant des radiotéléphones mobiles (MS) connectés aux réseaux, la zone géographique couverte par le réseau étant divisée en secteurs de desserte plus petits comprenant chacun un registre (VLR1, VLR2) de localisation de visiteur pour stocker de façon temporaire des données d'abonnés concernant des radiotéléphones mobiles (MS) situés à l'instant donné dans lesdits secteurs de desserte, et un centre de commutation (MSC1, MSC2) correspondant au registre de localisation de visiteurs, la zone géographique couverte par chaque secteur de desserte étant en outre divisée en zones de localisation, chacune divisée à son tour en cellules de radiocommunication comportant au moins une station de radiocommunication fixe (BTS1-4) apte à établir une liaison de radiocommunication avec les radiotéléphones mobiles actifs (MS) situés à l'instant donné dans la cellule de radiocommunication, système dans lequel
un des centres de commutation (MSC1, MSC2, GMSC) ou un centre de commutation d'un autre système de télécommunication communiquant avec le réseau reçoit le numéro d'abonné du radiotéléphone mobile et demande au registre (HLR) de localisation de domicile de fournir des informations d'acheminement de communication, et le registre (HLR) de localisation de domicile demande des informations d'acheminement au registre (VLR1, VLR2) de localisation de visiteurs dans la zone de localisation duquel le radiotéléphone mobile (MS) se trouve à l'instant donné, et il envoie les informations d'acheminement reçues au centre de commutation qui les a demandées pour acheminer la communication jusqu'au centre de commutation (MSC1, MSC2) du secteur de desserte concerné à l'instant donné, ainsi qu'au radiotéléphone mobile (MS) voulu, qui est recherché par une procédure de recherche de personne lancée par le centre de commutation dans sa zone de localisation, caractérisé en ce que, lorsque le registre (VLR1, VLR2) de localisation de visiteurs reçoit du registre (HLR) de localisation de domicile la demande d'informations d'acheminement, le centre de commutation (MSC1, MSC2) correspondant au registre de localisation de visiteurs lance immédiatement la recherche du radiotéléphone mobile (MS) dans la zone de localisation.

2. Procédé selon la revendication 1, caractérisé en ce que le registre (VLR1, VLR2) de localisation de visiteurs envoie les informations d'acheminement au registre (HLR) de localisation de domicile juste après avoir reçu la demande si le radiotéléphone mobile est actif, en fonction des informations stockées dans le registre de localisation de visiteurs.

3. Procédé selon la revendication 1, caractérisé en ce que le registre (VLR1, VLR2) de localisation de visiteurs envoie les informations d'acheminement au registre (HLR) de localisation de domicile lorsque la procédure de recherche du radiotéléphone mobile lancée par la demande émanant du registre de localisation de domicile a été achevée de manière satisfaisante.

4. Procédé selon l'une quelconque des revendications précédentes, caractérisé en ce que l'établissement d'une liaison de radiocommunication nécessaire pour la communication entre le radiotéléphone mobile (MS) et la station radio fixe (BTS1-4) de la cellule où se trouve le radiotéléphone mobile est lancé avant que la communication ne soit acheminée depuis le centre de commutation demandeur (MSC1, MSC2, GMSC) jusqu'à un centre de commutation (MSC1, MSC2) de la zone de localisation concernée à l'instant donné.

5. Procédé selon l'une quelconque des revendications précédentes, caractérisé en ce que, lorsqu'il demande des informations d'acheminement au registre de localisation de domicile, le centre de commutation envoie au registre de localisation de domicile le numéro de téléphone du radiotéléphone mobile.

6. Procédé selon l'une quelconque des revendications précédentes, caractérisé en ce que, lorsqu'il demande des informations d'acheminement au registre de localisation de visiteurs, le registre de localisation de domicile envoie au registre de localisation de visiteurs un numéro d'identification de radiotéléphone mobile utilisé dans le réseau.

7. Procédé selon l'une quelconque des revendications précédentes, caractérisé en ce que les informations d'acheminement fournies par le registre de localisation de visiteurs sont constituées par un numéro hors secteur local.
